# EUROPEAN PATENT APPLICATION

(11) **EP 2 197 230 A1**
(43) Date of publication of application: **16.06.2010**
(21) Application number: 08291182.7
(22) Date of filing: 15.12.2008
(51) Int. Cl.: H04W 48/02, H04L 29/06, H04L 29/12

(54) **Access module for use in a private network and related method**

(71) Applicant: Alcatel Lucent, 75008 Paris (FR)
(72) Inventor: Van Bogaert, Jan, 3140 Keerbergen (BE); Leroy, Suresh, 2340 Vlimmeren (BE)
(74) Representative: Vandenbroeck, Josiane Anne Marie

(57) **Abstract**

An access module for use by a wireless access point module in a private network that connects mobile devices to a mobile operator's network over a fixed access connection is described. The access module comprises a directory service module for entering an International Mobile Subscriber Identity being associated to a Subscriber Identity Module of one of said mobile devices and for returning, upon request of the wireless access point module coupled to the directory serviced module, a confirmation of a presence of the International Mobile Subscriber Identity. Hereby the mobile device receives permission for access to the wireless access point module and the fixed access line. (Figure 1).

## Description

The present invention relates to an access module for use in a private network by a wireless access point module and related method.

A wireless access point module, also called Universal Mobile Telecommunications System UMTS Femto Base Stations or UMTS Home Base Station Router, are small low cost, low power UMTS access points for home and corporate use cases. UMTS Femto Base Stations will be the first on the market later on followed other or newer radio standards like LTE and/or WiMAX. Femto Base Stations are low-power wireless access points that operate in licensed spectrum to connect standard mobile devices to a mobile operator's network by using a fixed residential Digital Subscriber Line DSL-line or a cable broadband connection. Since, more and more consumers want to use mobile phones in the home, even when there's a fixed line available and since friends and family usually call a mobile number first i.e. it's where messages and contact lists are stored, Femto Base Stations has proven its benefit. Femto Base Stations are devices that employ power and backhaul via the user's existing resources. It also enables capacity equivalent to a full 3G network sector at very low transmit powers, dramatically increasing battery life of existing phones, without needing to introduce WiFi enabled handsets. Mobile operators are showing a lot of interest in Femto base station as a solution for improving indoor coverage as well as offloading traffic from the outdoor UMTS network. For the end-user, a Femto base station offers the possibility to make cheap voice calls and data session at home while using their regular cellular phone. Likewise for the mobile operator, Femto base stations offer the possibility of offering the end-user services while off-loading their main network.

In case of residential Femto's, access to the Femto is limited to the home residents by means of pre-configuration by the operator. Visitors or people passing by will not be able to attach to the Femto and will be redirected to the macro network. According to the actual solution, the access restriction is implemented by configuring a list of authorized International Mobile Subscriber Identities IMSI's on the wireless access point module.

An International Mobile Subscriber Identity or shortly IMSI is a unique number associated with all GSM and UMTS mobile phone users. It is stored in the Subscriber Identity Module SIM-module inside the phone and is sent by the phone to the network. It is also used to acquire other details of the mobile in the Home Location Register HLR of the mobile network or it is locally copied in the Visitor Location Register.

So, a Subscriber Identity Module SIM on a removable SIM Card securely stores the service-subscriber key IMSI used to identify a subscriber on mobile telephony devices. The SIM card allows users to change phones by simply removing the SIM card from one mobile phone and inserting it into another mobile phone or broadband telephony device.

According to the existing solution, a list of allowed IMSI's, being determined by the mobile operator, is configured by the mobile operator through it's Auto Configuration Server, shortly called ACS, which is part of the mobile management system.

This means that the list of IMSI-numbers of the mobile subscribers that have permission to access services from the mobile operator's network via a predetermined wireless access point module i.e. a predetermined Femto, is predetermined by the mobile operator. This list of IMSI-numbers is transmitted by an Auto Configuration Server in the mobile network to the wireless access point module in the private network and preconfigured upon this particular wireless access point module. When the allowed mobile subscribers in the private network are changing over time, the pre-configured list of IMSI-numbers in the wireless access point module needs to be adapted i.e. the pre-configuration through the Auto configuration Server.

The above described method offers an adequate solution for private networks being residential use cases. However for private network of enterprise Femto solutions, this scheme no longer scales. Indeed, the number of authorized mobile subscribers is much higher and also the dynamics of the system i.e. authorized mobile subscribers, increases drastically e.g. new people are joining or leaving the company. Authorized users can be employees of the local enterprise site but can be also visitor from branch offices of other countries.

An object of the present invention is to provide an access module for use in a private network and for use by a wireless access point module in that private network that is suitable for a dynamic, higher number of mobile subscribers i.e. a higher number of Subscriber Identity Module's.

According to the invention, this object is achieved due to the fact that the access module comprises a directory service module in the private network for entering an International Mobile Subscriber Identity which is associated to an authorized Subscriber Identity Module of one of the mobile devices and for returning, upon request by the wireless access point module, a confirmation of the presence of the International Mobile Subscriber Identity and allowing thereby the mobile device, that comprises the authorized Subscriber Identity Module, to communicate via the wireless access point module with the mobile operator's network. Indeed, the step of entering the International Mobile Subscriber Identity - number is performed during a pre-configuration phase in or within the vicinity of the private network such as an enterprise. The following step of returning to the wireless access point module a confirmation is performed during operational phase of the mobile device and the wireless access point module. During this operational phase, when a mobile device tries to attach to the wireless access point module, the IMSI of the terminal is retrieved from a received signal by the wireless access point module and is checked against the entries in the directory service module such as for instance an X.500 directory.

Instead of maintaining separate access databases at the operator's side which need to be forwarded to the private network, the idea is to link the access authorization of an enterprise wireless access point module with the enterprise directory.

It has to be explained that an enterprise directory service module stores information about objects. Every entry in the enterprise directory relates to a single object. Examples of objects typically represented in a directory include people, organizations, and computers. An enterprise directory is built on a very generic technology that can be used to hold data about e.g. core information relating to the staff of an enterprise. The term directory is widely used, and there are many views as to what a directory is. However, the directory model referenced in this present application is in line with that of an open, general-purpose, enterprise directory. Once a directory system is included in a private network, it becomes a natural building block for enterprise applications which require access to information about enterprise staff.

A possible implementation of such directory service module is by means of X.500 data models. The primary concept of X.500 is that there is a single Directory Information Tree DIT and a hierarchical organization of entries which is distributed across one or more servers. The directory is a set of objects with similar attributes organised in a logical and hierarchical manner. The most common example is the telephone directory, which consists of a series of names, either of persons or organizations, organized alphabetically, with each name having an address and phone number attached.

The present idea makes use of the existing enterprise directories in stead of requiring the mobile operator to transmit to a large extend the IMSI-information to each enterprise. Rather than maintaining a semi-static access list for each wireless access point module, a tight integration with an enterprise directory services such as e.g. an X.500, imposes itself. This kind of plug and play solution provides a scalable solution whereby the access list is under control of the enterprise itself and doesn't require intervention from the mobile operator upon each and every required adaptation of the authorized list of mobile devices. The existing enterprise directories is re-used and extended with an entry of the appropriate IMSI-inputs.

It has to be remarked that a use of an existing enterprise directory is described in an *IEEE publication by Philips Research Laboratories Aachen with reference 0-7803-0950-2*/*93*/*$3.00*©*1993IEEE*. This document describes the use of standardized Directory Services (X.500) in comparison with the GSM concepts for storing mobility management date in Private Telecommunications Networks (PTN's). It has to be remarked, however, that this document is not describing a wireless access point module which is coupled to a fixed access line in order to connect mobile devices to a mobile's operator's network over this fixed access line. Furthermore, this document isn't describing neither the entries of IMSI's in such an enterprise directory. This actual application describes a solution wherein the enterprise directory is used to complement the existing mobile operator's databases rather than a substitution as described in the Philips document. Indeed, according to the present application, mobility management is still performed in the operator's network.

Optional, different Femto's are included in the private network such as e.g. one Femto for each floor, whereby the directory service module is further comprised for entering an identification of a respective wireless access point module that needs to be associated to a respective list of International Mobile Subscriber Identities.

It has to be remarked that furthermore, in association with the IMSI also admitted services for the respective mobile device (and user) can be stored and downloaded by the wireless access point module. Hereby, a user of a mobile device might posses permission to access the Femto and fixed access connection but isn't for instance allowed to access the present data network.

A further remark is that for one end-user two or more references to Subscriber Identity Module's (hosting in a mobile device) might be entered in the directory service module. Associated to each such SIM-module a mobile telephone number can for example be entered and herewith in addition a field for an IMSI-number can be filled or left empty. The presence of the International Mobile Subscriber Identity allows hereby, to the hosting mobile device, access to services of the mobile operator's network. Indeed, an end-user his private mobile number as well as his business number might be entered in the database. The business number might be associated with a related IMSI-number whereas the field for an entry associated to the private number stays empty which means that access is denied.

Optional, the access module can be further optimized by caching the authorized IMSI-numbers in the Femto itself. Hereby access module further comprises a cashing memory module in the wireless access point module, for caching at least part of the information of the directory service module. Hereby e.g. the complete authorization list is retrieved from the directory service module on a regular basis by the cashing memory module and avoids hereby a per user look-up from the wireless access point module up to the directory service module within the enterprise. So, upon having pushed the IMSI-information to the wireless access point module itself, it retrieves internally the answer to the authorization question.

Optional, the directory service module is distributed in the private network. Hereby part of the service module's storing space can be integrated in the wireless access point itself.

Optional together with the access list an additional list of authorized services can be retrieved from the directory.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being limitative to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

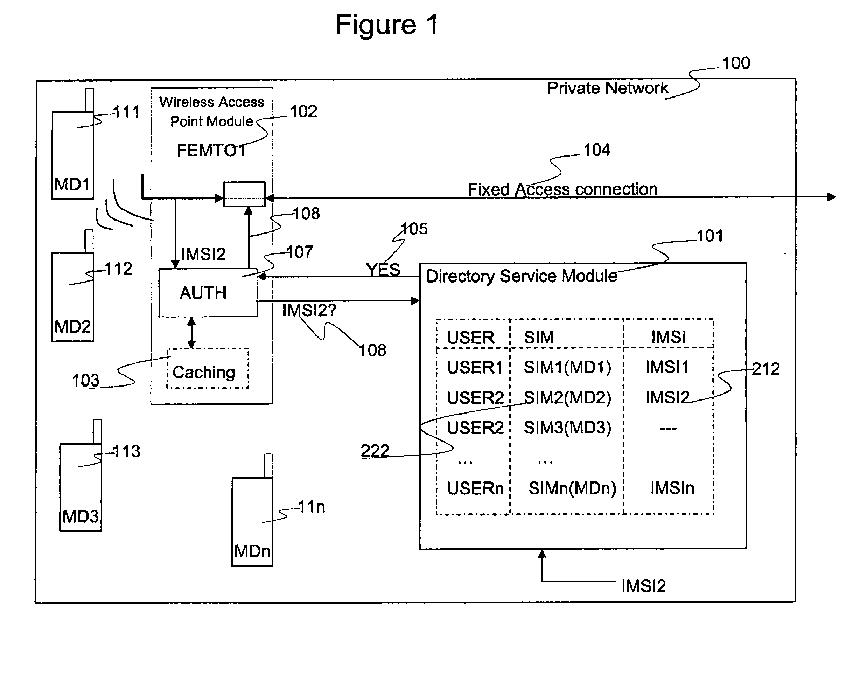

The above and other objects and features of the invention will become more apparent and the invention itself will be best understood by referring to the following description of an embodiment taken in conjunction with the accompanying drawing wherein Figure 1 represents a private network in an access network.

The working of the device according to the present invention in accordance with its telecommunication environment that is shown in Figure 1 will be explained by means of a functional description of the different blocks shown therein. Based on this description, the practical implementation of the blocks will be obvious to a person skilled in the art and will therefor not be described in details. In addition, the principle working of the method to manage access authorization for use in a private network will be described in further detail.

The private network 100 of Figure 1, comprises a number of mobile devices: MD1 with reference 111; MD2 with reference 112; MD3 with reference 113 and MDn with reference 11 n. Furthermore the private network comprises a wireless access point module 102 and a directory service module 101 being coupled to each other.

The wireless access point module 102 is coupled to a fixed access line 104 which provides on its turn access towards the Mobile operator's network.

The wireless access point module 102 comprises an authenticator AUTH 107 and a Caching memory 103.

According to this description of an embodiment, the directory service module 101 comprises, besides other entries, entries of end-user references such as USER1, USER2, ... , USERn; Subscriber Identity Module entries such as SIM1(MD1), SIM2(MD2) with reference 222 and SIMn(MDn) and International Mobile Subscriber Identities IMSI's such as IMSI1, IMSI2 with reference 212 and IMSIn.

As mentioned above, for one end-user such as USER2 more SIM entries can be made, such as SIM2 and SIM3. In association with the SIM number an IMSI-number entry can be made (allowing access) or not (denying access).

In order to be clear SIMn(MDn) means that the Subscriber Identity Module SIMn is comprised in the Mobile Device MDn i.e. MDn is hosting SIMn. Moreover, in the event when the SIMn is moved into another Mobile Device, it's the associated entry of the IMSI-number from this SIM-module that will allow permission to access for this other Mobile Device.

It has to be remarked that besides these entries the directory service module 101 might as well include an association to one or more wireless access point module's (not shown).

During configuration phase of the process, the Directory Service Module is built up. The IMSI numbers of the permitted SIM modules are defined by the enterprise and entered in the Directory Service Module. In this way e.g. the couple (SIM2(MD2), IMSI2) is entered into the directory service module. The Directory Service Module 101 can be exploited in a flexible way e.g. at the moment when a new employee starts working for a company and his administrative information such as full name, department, fax number of the department, working floor in the building, mobile number of his mobile device e.g. MD2, etc.... are entered into the Directory Service Module 101, also the associated International Mobile Subscriber Identity IMSI2 of his Mobile Device MD2 is entered into the same Directory Service Module 101. Furthermore, an update of the IMSI-number can be made in the data base when e.g. the employee receives a new SIM module with new IMSI-number. When the employee stops working for the company, his name etc. might be removed from the database together with his IMSI number. However, depending from the company's policy, the IMSI-number might as well remain in the database although the employee doesn't have access to the database anymore. In this way, whenever the person would come in the vicinity of the wireless access point module, as e.g. a visitor to the company, access to the mobile operator's network might still be permitted.

During operational phase the authorization to access is given as follows. In the event when e.g. the Mobile Device 112 comes in the surroundings of the wireless access point module 102, the wireless access point module will receive a signal of the Mobile Device 112. Before providing access, for the Mobile Device 112, to the mobile operator's network via the Fixed access connection 104, the Wireless access point module needs to know whether this is indeed permitted. The wireless access point module 102 retrieves the IMSI number from the signals received from the Mobile Devices MD2 112. The IMSI2 number is forwarded to the authenticator AUTH 107. The Authenticator AUTH 107 requests for a confirmation of the presence of the IMSI2 number 212 in the Directory Service Module 101. Hereby the Authenticator AUTH sends a request message (IMSI2?) 108 that includes the IMSI number IMSI2 to the Directory Service Module 101. The Directory Service Module 101 checks upon the presence of the included IMSI number in its database. When the IMSI2 number is indeed present in the database the Directory Service Module 101 returns a confirmation of the presence YES 105 to the Authenticator 107. Reception of this confirmation message 105 provides hereby allowance to the mobile device MD2 to access to the mobile's operator network via the wireless access point module 102 and via the fixed access connection 104.

It has to be explained that the above possible implementation is based upon merely the presence of the IMSI2 number in the directory service module 101 to confirm the permission for communication over the fixed access connection. However, alternative implementation might require a further check up of predefined rules and conditions before indeed allowing the communications. Such a rule might be that, upon confirmation of the presence of the IMSI number in the database, an additional entry such as e.g. Yes / No , in association with the IMSI number needs to be checked first, before permission for communications is provided. The predefined rules and conditions might be executed by the directory service module 101 or by the wireless access point module. However, the aim of the present application is that at least the presence of the number in the directory service module 101 must be confirmed before communication via the wireless access point module 102 with the mobile operator's network is allowed to the mobile device 112.

A further remark is that the permission to access is provided according to this particular embodiment in the event when the respective IMSI number is present and found in the Directory Service Module 101 whereby a confirmation YES with reference 105 is returned to the Wireless access point module. However, the confirmation provided from the Directory service module 101 to the wireless action point module 102 might as well be provided by means of returning the IMSI number itself.

The allowance message to enable the mobile device MD2 112 to communicate via the wireless access point module 102 with the mobile operator's network is shown in the Figure 1 by means of arrow 108.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention, as defined in the appended claims.

## Claims

1. An access module (101, 103) for use in a private network (100) by a wireless access point module (102) that connects mobile devices (111, 112, 113, ..., 11n) to a mobile operator's network over a fixed access connection (104), **characterized in that** said access module (101, 103) comprises :
- a directory service module (101) for entering an International Mobile Subscriber Identity (212) being associated to a Subscriber Identity Module (222) of one of said mobile devices (112) and for returning, upon request of said wireless access point module (102) being coupled to said directory service module (101), a confirmation (105) of a presence of said International Mobile Subscriber Identity (212) and allowing thereby said mobile device (112) access via said wireless access point module (102) to services of said mobile operator's network.

2. The access module for use in a private network (100) according to claim 1, **characterized in that** said directory service module (101) is further comprised for entering an identification (FEMT01) of said wireless access point module (102) being associated to said International Mobile Subscriber Identity (212) entry.

3. The access module (101, 103) for use in a private network according to claim 1, **characterized in that** said access module (101, 103) further comprises a cashing memory module (103) in said wireless access point module, for caching at least part of the information of said directory service module (101, 103).

4. The access module (101, 103) for use in a private network according to claim 1, **characterized in that** said directory service module (101) is distributed in said private network (100).

5. A method to manage access authorization for use in a private network (100) by a wireless access point module (102) that connects mobile devices (111, 112, 113, ..., 11n) to a mobile operator's network over a fixed access connection (104), **characterized in that** said method comprises a step of
- entering in a directory service module (101) an International Mobile Subscriber Identity (212) being associated to a Subscriber Identity Module (222) of one of said mobile devices (112); and
- returning, upon request of said wireless access point module (102) being coupled to said directory serviced module (101), a confirmation (105) of a presence of said International Mobile Subscriber Identity (212) and allowing thereby said mobile device (112) access via said wireless access point module (102) to services of said mobile operator's network.
